# EUROPÄISCHE PATENTSCHRIFT

(11) **EP 1 675 757 B1**
(45) Veröffentlichungstag und Bekanntmachung des Hinweises auf die Patenterteilung: **29.12.2010**
(21) Anmeldenummer: 04790458.6
(22) Anmeldetag: 15.10.2004
(51) Int. Cl.: B60R 16/02

(54) **VORRICHTUNG UND VERFAHREN ZUM STEUERN EINER GLEICHSPANNUNG**
DEVICE AND METHOD FOR CONTROLLING A D.C. VOLTAGE
DISPOSITIF ET PROCEDE POUR REGULER UNE TENSION CONTINUE

(30) Priorität: 22.10.2003 DE 10350295
(43) Veröffentlichungstag der Anmeldung: 05.07.2006
(73) Patentinhaber: ebm-papst St. Georgen GmbH & Co. KG, 78112 St. Georgen (DE)
(72) Erfinder: HAHN, Alexander, 88605 Sauldorf (DE); KISCH, Michael, 78112 St. Georgen (DE); SCHMID, Harald, 78576 Emmingen (DE)
(74) Vertreter: Raible, Tobias
(86) Internationale Anmeldenummer: PCT/EP2004/011605
(87) Internationale Veröffentlichungsnummer: WO 2005/042313

(56) Entgegenhaltungen:
- EP-A2- 0 492 103
- EP-A2- 0 814 571
- DE-A1- 4 141 586
- US-A- 5 190 009

## Beschreibung

Die Erfindung betrifft eine Anordnung und ein Verfahren zum Steuern einer Gleichspannung.

Auf Fahrzeugen muss man häufig aus der Batteriespannung eine geregelte Hilfs-Gleichspannung erzeugen, welche beispielsweise zur Versorgung elektronischer Bauteile geeignet ist.

Die Spannung auf einem Fahrzeug, deren Nennwert z. B. 12 V beträgt, kann im Betrieb stark schwanken. Beispielsweise können sehr hohe Spannungen auftreten, wenn die Batterie abgeklemmt ist und die Lichtmaschine läuft.

Ferner ergibt sich das Problem, dass manche elektrischen und elektronischen Bauteile eines Kraftfahrzeuges eine bestimmte Zeit brauchen, bis sie nach dem Einschalten funktionsfähig sind, und dass durch das Ausschalten des Kraftfahrzeugs nicht automatisch alle Prozesse beendet werden, die in diesem ablaufen. Z. B. könnte ein Stellmotor, der abgeschaltet wird, wenn er gerade einen Stellvorgang ausführt, nach dem Abschalten des Zündschlüssels noch eine Zeit lang unkontrolliert weiter laufen. Das würde eine potenzielle Gefahr darstellen und ist deshalb nicht wünschenswert.

Die DE 4 141 586 A1 betrifft verschiedene Schaltungsanordnungen zur Steuerung des Nachlaufs bei einem Kraftfahrzeug. Einer solchen Schaltungsanordnung ist zum Bereitstellen einer Gleichspannung eine Batterie zugeordnet. Aus der Batteriespannung wird durch einen Spannungsregler eine Hilfsspannung abgeleitet. Nach Abschalten des Zündschlosses wird das Steuergerät noch während einer vorgegebenen Zeitspanne, auch Nachlaufzeit genannt, mit Spannung versorgt. Durch Beeinflussen des Eingangspotentials des Spannungsreglers wird dessen Ausgangsspannung nach Ablauf der vorgegebenen Zeitspanne abgeschaltet. Bei einem ersten Ausführungsbeispiel geschieht dies mittels eines Kondensators, der den Spannungsregler während der vorgegebenen Zeitspanne eingeschaltet hält, deren Dauer hier von der Größe dieses Kondensators abhängt. Bei einem zweiten und einem dritten Ausführungsbeispiel wird die Dauer der vorgegebenen Zeitspanne in einer CPU programmiert, d.h. je nach den Bedürfnissen kann diese Zeitdauer durch Programmierung verändert werden, was gewöhnlich in der Fabrik geschieht. Zur Abschaltung gibt die CPU nach Ablauf der vorgegebenen Zeitspanne einen Ausschaltbefehl an den Spannungsregler.

In der Terminologie des Anspruchs 1 zeigt also das zweite Ausführungsbeispiel der DE-A1-4141586 folgendes:
Ein Verfahren für ein Kraftfahrzeug, das zu seiner Stromversorgung mit einer Batterie versehen ist, zum Bereitstellen einer Gleichspannung aus dieser Batterie, wobei vorgesehen sind:
   Ein Mikrocontroller;
   eine steuerbare Hilfsspannungsversorgung, welche einen ersten Spannungsregler aufweist, der durch ein Steuersignal aktivierbar ist und der aus einer Eingangsspannung eine Gleichspannung erzeugt, die auf einen ersten Wert geregelt ist;
   eine Selbsthalteschaltung zum Aktivhalten der Hilfsspannungsversorgung, welche Selbsthalteschaltung durch ein Einschaltkriterium aktivierbar ist;
   der Mikroprozessor ist dazu ausgebildet, bei Vorliegen eines Ausschaltbefehls die Selbsthalteschaltung verzögert zu deaktivieren.

Es ist deshalb eine Aufgabe der Erfindung, eine neue Anordnung und ein neues Verfahren zum Steuern einer Gleichspannung bereit zu stellen.

Diese Aufgabe wird gelöst durch ein Verfahren gemäß Anspruch 1. Durch die Selbsthalteschaltung wird erreicht, dass beim Vorliegen eines Ausschaltbefehls die Hilfsspannungsversorgung nicht sofort die Spannung 0 liefert, sondern dass sie durch den Mikrocontroller nach vorgegebenen Kriterien verzögert deaktiviert wird. Dies bedeutet in der Praxis, dass z. B. ein laufender Elektromotor zuerst bis zum Stillstand abgebremst wird, und erst dann die Selbsthalteschaltung deaktiviert wird, um die Hilfsspannung auf 0 zu bringen und dadurch die Elektrik bzw. Elektronik des Fahrzeugs vollständig auszuschalten.

Eine andere Lösung der gestellten Aufgabe ist Gegenstand des Patentanspruchs 3. Eine solche Anordnung hat den Vorteil, dass sie bei Vorliegen eines Ausschaltbefehls noch aktiv gehalten werden kann und es so ermöglicht, die Hilfsspannungsversorgung nach vorgegebenen Kriterien verzögert zu deaktivieren.

Durch die Vorschaltung eines ersten Linearreglers ist es möglich, die ggf. stark schwankende Eingangsspannung auf einen ersten Wert zu regeln und dabei Schwankungen und Störungen weitgehend zu beseitigen. Der zweite Linearregler kann daraufhin - ausgehend von diesem weitgehend konstanten ersten Wert - eine zweite Gleichspannung erzeugen, welche von guter Konstanz ist.

Weitere Vorteile, Besonderheiten und zweckmäßige Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den Unteransprüchen und deren Kombinationen. Es zeigt:
- Fig. 1: ein erstes Ausführungsbeispiel einer erfindungsgemäßen Anordnung,
- Fig. 2: ein zweites Ausführungsbeispiel einer erfindungsgemäßen Anordnung,
- Fig. 3: ein Anwendungsbeispiel für eine Anordnung nach Fig. 1 oder Fig. 2, und
- Fig. 4: eine dritte Variante die nicht zu der Erfindung gehört

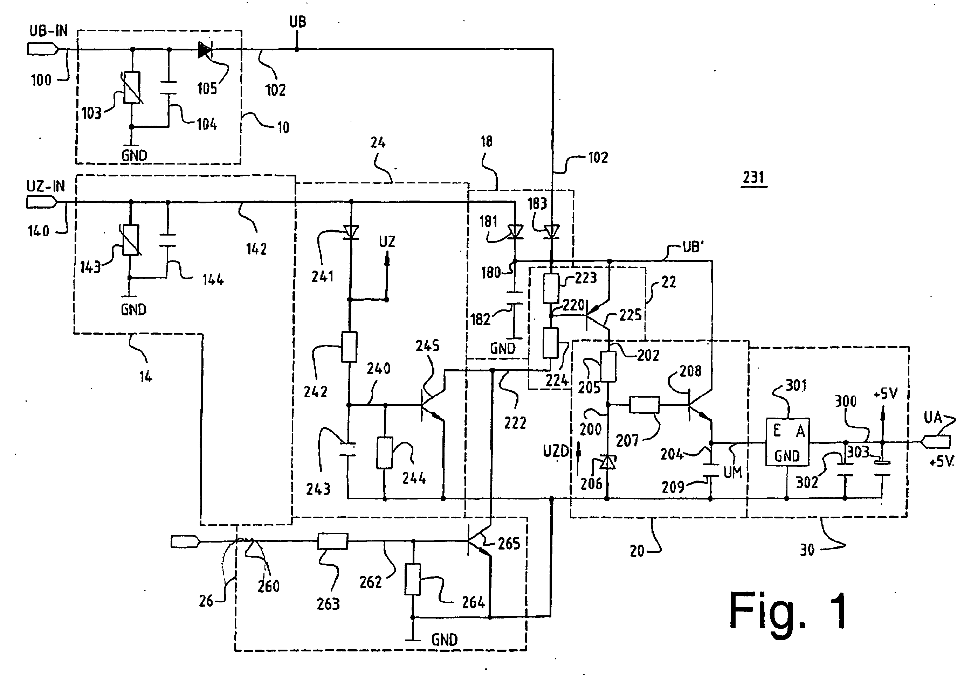

**Fig. 1** zeigt ein Schaltbild eines erfindungsgemäßen Spannungsreglers 231 zur Erzeugung eine Hilfsspannung U_{A}. Dieser Regler weist eine erste Filterschaltung 10 zur Filterung einer Batteriespannung U_{B} auf, eine zweite Filterschaltung 14 zur Filterung einer Zündspannung U_{Z}, eine Verpolschutz- und Glättungsschaltung 18, einen ersten Linearregler 20, ein Schaltteil 22 zum Aktivieren und Deaktivieren des ersten Linearreglers 20, eine Zündspannungsschaltung 24 zum Aktivieren und/oder Deaktivieren des Schaltteils 22, eine Selbsthalteschaltung 26 zum Aktivieren und/oder Deaktivieren des Schaltteils 22, sowie einen zweiten Linearregler 30, welcher mit dem ersten in Reihe geschaltet ist.

Bei einem Kraftfahrzeug ist im Normalfall eine Betriebsspannung U_{B} ständig vorhanden, und sie wird im Betrieb zusätzlich durch einen Generator erzeugt. Die Zündspannung U_{Z} liegt dagegen nur vor, wenn beispielsweise bei einem PKW der "Zündschlüssel" im "Zündschloss" gedreht wurde.

Die Betriebsspannung U_{B} wird in der ersten Filterschaltung 10 gefiltert, d.h. Spannungsspitzen werden ausgefiltert. Ebenso wird die Zündspannung U_{Z} in der zweiten Filterschaltung 14 gefiltert. Über die Verpolschutz- und Glättungsschaltung 18 werden Betriebsspannung U_{B} und Zündspannung U_{Z} als Betriebsspannung U_{B}' dem ersten Linearregler 20 zugeführt, welcher, sofern er aktiv ist, die Betriebsspannung U_{B}' auf eine Zwischengleichspannung UM regelt. Die Zwischengleichspannung U_{M} wird dem zweiten Linearregler 30 zugeführt, welcher die Zwischengleichspannung U_{M} auf die gewünschte Ausgangsspannung U_{A} regelt, z.B. auf +5 V.

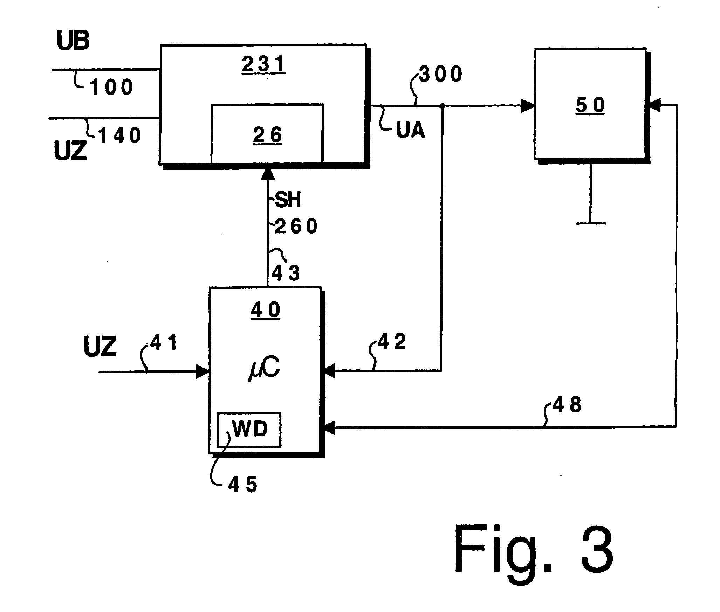

Der erste Linearregler 20 ist durch das Schaltteil 22 aktivierbar und deaktivierbar. Das Schaltteil 22 wiederum ist durch die Zündspannungsschaltung 24 schaltbar, insbesondere dann, wenn die Zündspannung UZ anliegt, und zusätzlich ist es durch die Selbsthalteschaltung 26 schaltbar, insbesondere dann, wenn ein in einem µC ablaufendes Programm bestimmt, dass eine Selbsthaltung erfolgen soll, vgl. Fig. 3.

Die erste Filterschaltung 10 hat einen Punkt 100 (Eingang U_{B}-IN), über den die Betriebsspannung U_{B} zugeführt wird, ferner einen Varistor 103 und einen Kondensator 104, welche zwischen Punkt 100 und Masse GND geschaltet sind, und eine Diode 105, welche zwischen dem Punkt 100 und einem Punkt 102 in Durchlassrichtung geschaltet ist. Der Varistor 103 beseitigt Spannungsspitzen der Betriebsspannung U_{B}.

Die zweite Filterschaltung 14 hat einen Punkt 140 (Eingang U_{Z}-IN), über den die Zündspannung Uz einem Punkt 142 zugeführt wird. Von dem Punkt 142 sind ein Varistor 143 und ein Kondensator 144 nach Masse GND geschaltet.

Die Betriebsspannung U_{B} wird vom Punkt 102 über eine als Verpolschutz geschaltete Diode 183 einem Punkt 180 zugeführt, und die Zündspannung Uz wird vom Punkt 142 über eine als Verpolschutz geschaltete Diode 181 dem Punkt 180 zugeführt. Die am Punkt 180 resultierende Spannung U_{B}' wird über einen gegen Masse GND geschalteten Kondensator 182 weiter geglättet.

Der erste Linearregler 20 weist einen npn-Transistor 208 auf, dessen Kollektor mit dem Punkt 180, dessen Emitter (Punkt 204) über einen Kondensator 209 mit Masse GND und dessen Basis über einen Widerstand 207 mit einem Punkt 200 verbunden ist. Der Punkt 200 ist über einen Widerstand 205 mit einem Punkt 202 und über eine Z-Diode 206 mit Masse GND verbunden. Der Punkt 202 ist über das Schaltteil 22 mit dem Punkt 180 (Spannung U_{B}') verbunden.

Über die Zenerdiode 206 wird bei geschlossenem Schaltteil 22 die Zenerspannung U_{ZD}, beispielsweise 27 V, an die Basis des npn-Transistors 208 angelegt, und über den Transistor 208 fließt jeweils so lange ein Basisstrom I_B und damit auch ein Kollektorstrom I_C, bis die Spannung am Kondensator 209 der Spannung U_{ZD} der Z-Diode 206 entspricht. Damit wird die Spannung UM am Punkt 204 auf die Spannung U_{ZD} der Z-Diode 206 geregelt. Man spricht von einem sogenannten "Linearregler". Hierbei wirkt der Transistor 208 als variabler Widerstand. Man spricht auch von einem Längstransistor 208.

Das Schaltteil 22 hat einen pnp-Transistor 225, dessen Emitter mit dem Punkt 180 (Spannung U_{B}'), dessen Kollektor mit dem Punkt 202 des ersten Linearreglers 20 und dessen Basis mit einem Punkt 220 verbunden ist. Letzterer ist über einen Widerstand 223 mit dem Punkt 180 und über einen Widerstand 224 mit einem Punkt 222 verbunden. Ist der Punkt 222 über die Zündspannungsschaltung 24 oder die Selbsthalteschaltung 26 mit Masse GND verbunden, so wirken die Widerstände 224, 223 als Spannungsteiler, und der Transistor 225 bildet eine Verbindung zwischen dem Punkt 180 und dem Punkt 202 und aktiviert damit den ersten Linearregler 20. Ist der Punkt 222 dagegen nicht mit Masse GND verbunden, so ist der Transistor 225 nicht leitend, und der erste Linearregler 20 ist deaktiviert.

Die Zündspannungsschaltung 24 hat einen npn-Transistor 245, dessen Kollektor mit dem Punkt 222 des Schaltteils 22, dessen Emitter mit Masse GND und dessen Basis mit einem Punkt 240 verbunden ist. Der Punkt 240 ist über einen Kondensator 243 und parallel hierzu über einen Widerstand 244 mit Masse GND verbunden. Weiterhin ist der Punkt 240 über einen Widerstand 242 und eine als Verpolschutz geschaltete Diode 241 mit dem Punkt 142 (Uz) verbunden. Falls am Punkt 142 die Zündspannung Uz anliegt, fließt ein Strom durch die als Spannungsteiler wirkenden Widerstände 242 und 244, und der Transistor 245 wird leitend gemacht. Hierdurch wird das Schaltteil 22 leitend und der erste Linearregler 20 aktiviert. Der als Tiefpass wirkende Kondensator 243 schützt vor einer versehentlichen Einschaltung durch kurze Störimpulse.

Die Selbsthalteschaltung 26 hat einen Eingang 260, der über einen Widerstand 263 mit einem Punkt 262 verbunden ist, ferner einen npn-Transistor 265, dessen Kollektor mit dem Punkt 222, dessen Emitter mit Masse GND und dessen Basis mit dem Punkt 262 verbunden ist. Der Punkt 262 ist weiterhin über einen Widerstand 264 mit Masse GND verbunden. Wird - beispielsweise durch einen in Fig. 1 nicht dargestellten µC - der Eingang 260 auf +5 V gesetzt, so wird der npn-Transistor 265 leitend. Hierdurch wird analog zu der Zündspannungsschaltung 24 das Schaltteil 22 leitend gemacht, und der erste Linearregler 20 wird aktiviert, so dass man an einem Ausgang 300 die geregelte Hilfsspannung U_{A} erhält.

Der zweite Linearregler 30 weist einen Spannungsregler 301 auf, dessen Eingang E mit dem Punkt 204 (Zwischengleichspannung UM), dessen Anschluss GND mit Masse GND und dessen Ausgang A mit dem Punkt 300 verbunden ist. Letzterer ist über einen Kondensator 302 und einen Kondensator 303 mit Masse GND verbunden. Der verwendete Spannungsregler 301 ist bevorzugt vom Typ 78XX, insbesondere 7805. Die Kondensatoren 302 und 303 glätten die geregelte Ausgangsspannung U_{A} am Punkt 300.

Die Schaltung nach Fig. 1 hat den Vorteil, dass sowohl die Betriebsspannung U_{B} als auch die Zündspannung Uz zur Erzeugung der Ausgangsspannung U_{A} verwendet werden. Falls eine der Spannungen U_{B} oder U_{Z} ausfällt, so ist die Spannungsregelung 231 weiterhin funktionstüchtig.

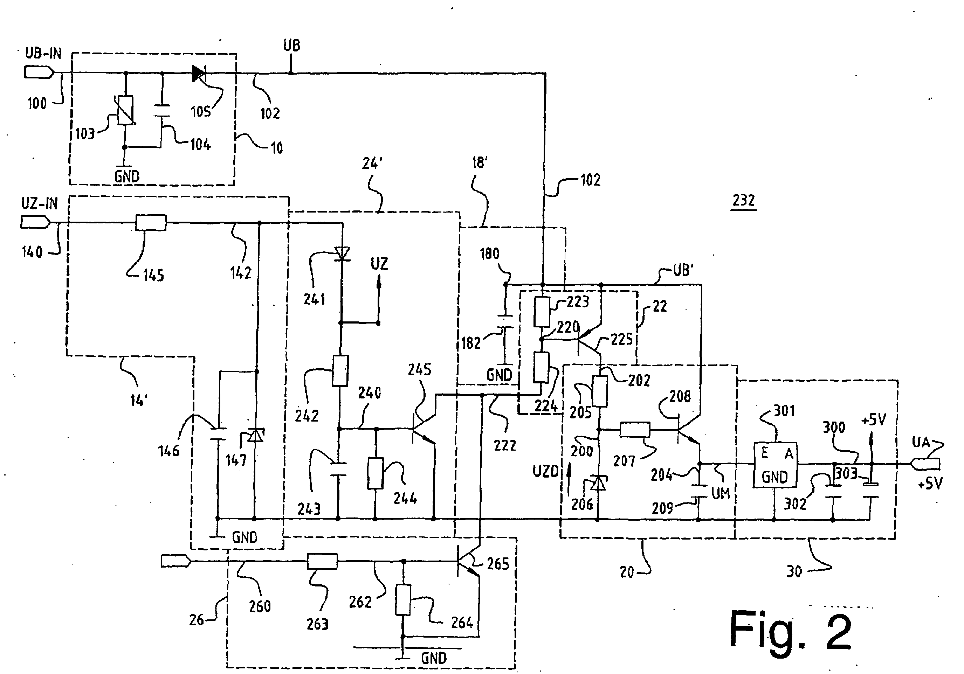

**Fig. 2** zeigt eine andere vorteilhafte Ausgestaltung eines Spannungsreglers 232 zur Erzeugung einer geregelten Hilfsspannung U_{A}. Gleiche bzw. gleich wirkende Bauteile haben die gleichen Bezugszeichen wie in Fig. 1 und werden nicht nochmals erläutert.

Im Folgenden wird insbesondere auf die Unterschiede zu der Spannungsregelung 231 aus Fig. 1 eingegangen.

Die zweite Filterschaltung 14' hat einen Punkt 140 (Eingang U_{Z}-IN), über den die Zündspannung UZ zugeführt wird. Der Punkt 140 ist über einen Widerstand 145 mit einem Punkt 142 verbunden. Eine Filterung der Zündspannung über einen Varistor 143 und eine Diode 144 wie in Fig. 1 kann hier entfallen.

Von dem Punkt 142 sind ein Kondensator 146 und eine Zenerdiode 147 nach Masse GND geschaltet, und diese schützen die Zündspannungsschaltung 24' vor einer Überspannung.

Eine Verbindung zwischen dem Punkt 142 und dem Punkt 180 der Glättungsschaltung 18' über eine Diode 181 wie in Fig. 1 ist nicht vorgesehen. Hierdurch wird die Ausgangsspannung U_{A} nur aus der Betriebsspannung U_{B} erzeugt, und die Zündspannung Uz wird nur zur Steuerung bzw. als Logiksignal verwendet. Dies hat den Vorteil, dass der in Fig. 1 verwendete Varistor 143 und der Kondensator 144 sowie die Dioden 181 und 183 entfallen können.

### Liste der verwendeten Bauteile

| | |
|---|---|
| Kondensator 146 | 1 nF |
| Kondensator 182 | 100 nF |
| Kondensator 209 | 220 nF |
| Kondensator 243 | 100 nF |
| Kondensator 302 | 100 nF |
| Kondensator 303 | 10 µF |
| Diode 105 | 1 N4007 |
| Diode 183 | BAV70 |
| Diode 241 | BAV70 |
| IC 301 | 7805 oder L78M05ABDT |
| Widerstand 145 | 1 kΩ |
| Widerstand 205 | 3,3 kΩ |
| Widerstand 207 | 1 kΩ |
| Widerstand 223 | 47 kΩ |
| Widerstand 224 | 200 kΩ |
| Widerstand 242 | 10 kΩ |
| Widerstand 244 | 10 kΩ |
| Widerstand 263 | 10 kΩ |
| Widerstand 264 | 10 kΩ |
| Transistor 208 | BCP56-16 |
| Transistor 225 | BC856B |
| Transistor 245 | BC846B |
| Transistor 265 | BC846B |
| Varistor 103 | Varistor |
| Varistor 143 | Varistor |
| Zenerdiode 147 | UDZTE 15 V |
| Zenerdiode 206 | BZX84C27 |

**Fig**. **3** zeigt eine Anordnung mit einem µC 40 und dem Spannungsregler 231 gemäß Fig. 1. Alternativ ist auch der Spannungsregler 232 gemäß Fig. 2 anwendbar. Gleiche Bezugszeichen wie in Fig. 1 bezeichnen gleiche Teile und werden nicht nochmals erläutert.

Der µC 40 hat einen Watchdog-Timer WD 45, einen Eingang 41, welcher mit der Zündspannung Uz verbunden ist, einen Eingang 42, über den die µC-Betriebsspannung von dem Ausgang 300 (U_{A}) des Spannungsreglers 231 zugeführt wird, und einen Ausgang 43, welcher mit dem Eingang 260 (SH) des Spannungsreglers 231 verbunden ist. Die Ausgangsspannung U_{A} (Punkt 300) wird hier auch anderen Verbrauchern bzw. Geräten 50 zugeführt.

Sobald die Zündspannung Uz anliegt, wird die Spannungsregelung 231 aktiviert, und am Ausgang 300 wird eine Ausgangsspannung U_{A} von beispielsweise +5 V bereitgestellt. Diese Ausgangsspannung U_{A} dient als Betriebsspannung für weitere elektrische oder elektronische Bauteile 50, sowie für den µC 40.

Der Watchdog-Timer 45 erkennt, dass eine Betriebsspannung am Eingang 42 vorliegt, der µC 40 jedoch nicht initialisiert wurde. Daher löst der Watchdog-Timer 45 einen internen Reset aus, und der µC 40 geht in Betrieb.

Sobald der µC 40 eingeschaltet ist, aktiviert er die Selbsthalteschaltung 26, indem er über den Ausgang 43 ein Signal an den Eingang 260 (SH) der Selbsthalteschaltung 26 ausgibt. Hierdurch ist sicher gestellt, dass der Spannungsregler 231 auch nach dem Abschalten der Zündspannung Uz aktiviert bleibt. Über den Eingang 41 erfasst der µC 40, ob weiterhin die Zündspannung U_{Z} vorliegt. Liegt die Zündspannung Uz nicht mehr vor, so kann der µC 40 weiterhin Aufgaben erledigen, da er selbst über seinen Ausgang 43 den Spannungsregler 231 aktiv hält.

Erst, wenn der µC 40 alle Aufgaben erledigt hat und bereit zum Abschalten ist, wird über den Ausgang 43 die Selbsthalteschaltung 26 deaktiviert, und da die Zündspannungsschaltung 24 ebenfalls deaktiviert ist, schaltet der Spannungsregler 231 ab, die Ausgangsspannung U_{A} wird zu 0 V, und der µC 40 sowie die übrigen Geräte 50 werden abgeschaltet.

Hätte der µC 40 keinen Einfluss auf den Spannungsregler 231, so würde er automatisch mit Wegfall der Zündspannung Uz abgeschaltet werden.

Als eine der möglichen Aufgaben des µC 40 kann dieser den Geräten 50 über ein Businterface 48, welches bevorzugt bidirektional ist, mitteilen, dass in Kürze eine Abschaltung erfolgt.

Die Anordnungen nach Fig. 1 und 2 eignen sich besonders auch für höhere Batteriespannungen, z.B. von 24 oder 48 V, bei denen für die Elektronik (oder Teile der Elektronik) des Kraftfahrzeugs eine niedrigere Spannung benötigt wird, z.B. 12 V oder weniger.

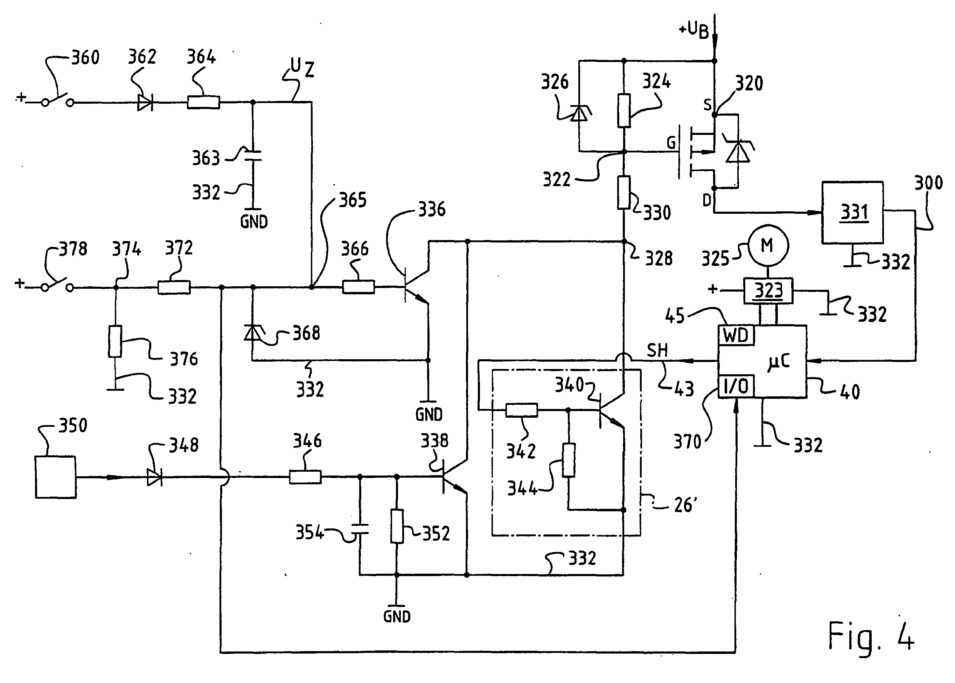

**Fig. 4** zeigt eine Variante, die sich besonders auch für niedrigere Batteriespannungen eignet, z.B. für eine Nennspannung von 12 V.

In diesem Fall ist es - wegen der relativ niedrigen Kapazität einer solcher Batterie - wichtig, dieser bei stehendem Fahrzeug einen möglichst niedrigen Strom zu entnehmen. Dies bedeutet, dass bei Stillstand des Fahrzeugs die Batterie nur mit einem Strom von z.B. < 100 µA belastet werden sollte.

Mit der Schaltung nach Fig. 4 wird dies ermöglicht. Diese verwendet für das Durchschalten der Spannung U_{B} zu einem Hilfsspannungsregler 331 einen p-Kanal-MOSFET 320, dessen Source S an die Batteriespannung +UB angeschlossen ist, dessen Drain D mit einer Hilfsspannungsversorgung 331 (Längsregler oder Schaltnetzteil) verbunden ist, und dessen Gate G an einen Knotenpunkt 322 angeschlossen ist. Zwischen Gate G und Source S liegt die Parallelschaltung eines Widerstands 324 und einer Zenerdiode 326, deren Funktion es ist, die Spannung zwischen Source S und Gate G auf maximal 20 V zu begrenzen. Zwischen dem Knotenpunkt 322 und einem Knotenpunkt 328 liegt ein Widerstand 330. Zwischen dem Knotenpunkt 328 und Masse 332 liegen parallel zueinander:
a) Die Kollektor-Emitter-Strecke eines npn-Transistors 336;
b) die Kollektor-Emitter-Strecke eines npn-Transistors 338;
c) die Kollektor-Emitter-Strecke eines npn-Transistors 340.

Diese drei Transistoren stellen ein disjunktives Glied ("ODER-Glied") dar, d.h. wenn mindestens einer von ihnen leitet, wird der MOSFET 320 leitend und verbindet die Hilfsspannungsversorgung 331 mit +U_{B}, wobei am MOSFET 320 nur ein niedriger Spannungsabfall auftritt. Die Hilfsspannungsversorgung 331 versorgt über eine Leitung 300 den µC 40 z.B. mit einer geregelten Spannung von + 5 V. Der µC 40 steuert - beispielhaft - über eine Treiberstufe 323 einen Elektromotor 325.

Es kann nun vorkommen, dass der Motor 325 beim Abschalten der Zündung und Abziehen des Zündschlüssels gerade einen Stellbefehl erhalten hat, z.B. von seiner Lageregelung, und sich deshalb dreht. Würde der Motor 325 plötzlich stromlos gemacht, so würde er sich unkontrolliert weiter drehen und irgendwann zum Stillstand kommen. Bei Motoren mit kritischen Funktionen wäre das bei vielen Anwendungen unzulässig.

Der µC 40 hat eine Watchdog-Schaltung 45 (WD), die beim Einschalten aktiv wird und bestimmte Routinen auslöst, vor allem die Initialisierung des µC 40. Z.B. kann es sein, dass der Motor 325 vor dem Start in eine bestimmte Drehstellung gedreht werden muss, und dies kann ein Teil einer Initialisierungsroutine sein, die vor oder beim Einschalten der Zündung durchgeführt werden muss.

Beim Abschalten des Fahrzeugs würde an sich der MOSFET 320 sofort gesperrt, und die Hilfsspannungsversorgung 331, welche den µC 40 mit einer Hilfsspannung versorgt, würde sofort stromlos.

Deshalb erfolgt, ebenso wie in Fig. 3, über den Ausgang 43 des µC 40 eine Selbsthaltung, d.h. vom Ausgang 43 wird über einen Widerstand 342 der Basis des Transistors 340 ständig ein positives Signal zugeführt, so dass dieser leitend bleibt, bis die Abschaltroutinen im µC 40 abgelaufen sind und der Motor 325 in kontrollierter Weise zum Stillstand gelangt ist, z.B. durch einen aktiven Bremsvorgang.

Erst nach Ablauf dieser Abschaltroutinen erzeugt der µC 40 an seinem Ausgang 43 kein positives Signal mehr und sperrt dadurch den Transistor 340, so dass der MOSFET 320 sperrt, sofern auch die beiden anderen Transistoren 336 und 338 gesperrt sind, und dadurch erhält dann die Hilfsspannungsversorgung 331 keine Spannung mehr.

Der Transistor 338 ist Teil einer sogenannten Aufweckschaltung und ist über einen Widerstand 346 und eine Diode 348 mit einem Eingang 350 verbunden, z.B. der Betätigung des Kraftfahrzeug-Türschlosses, oder einer anderen Signalquelle, z.B. dem Prozessor eines Bus-Systems. Zwischen der Basis des Transistors 338 und Masse 332 liegt die Parallelschaltung eines Widerstands 352 und eines Kondensators 354.

Wenn die Türe des Kraftfahrzeugs geöffnet wird, wird der Transistor 338 leitend gemacht und macht auch den MOSFET 320 leitend, so dass die Hilfsspannungsversorgung 331 und folglich auch der µC 40 Strom erhalten und die erforderliche Initialisierung problemlos ablaufen kann, d.h. bis der Fahrer eingestiegen ist, ist das Fahrzeug startbereit.

Der Transistor 336 wird von einem Zündschloss 360 gesteuert. Wenn dieses geschlossen wird, erhält der Transistor 336 über eine Diode 362, einen Widerstand 364, einen Knotenpunkt 365 und einen Widerstand 366 ein Einschaltsignal und hält den MOSFET 320 leitend. Als Siebglied ist ein Kondensator 363 zwischen dem Knotenpunkt 365 und Masse 332 vorgesehen. Parallel zu ihm liegt eine Zenerdiode 368, z.B. für 3 V. Der Knotenpunkt 365 ist auch mit einem I/O-Glied 370 des µC 40 verbunden und liefert an diesen ein Signal, das anzeigt, ob der Zündschlüssel steckt oder nicht, bzw. ob die Zündung eingeschaltet ist. Dieses Signal zeigt also an, ob wenigstens einer der beiden Schalter 360, 378 geschlossen ist, oder ob ein Ausschaltbefehl vorliegt, d.h. dass der Zündschlüssel ausgeschaltet und abgezogen ist.

Zu diesem Zweck ist der Knotenpunkt 365 über einen Widerstand 372 mit einem Knotenpunkt 374 verbunden, der über einen Widerstand 376 mit Masse 332 verbunden ist. An den Knotenpunkt 374 ist ein Schalter 378 angeschlossen, welcher geschlossen wird, wenn der Zündschlüssel steckt und welcher dann den Knotenpunkt 374 mit Plus (+) verbindet und ein Einschalten der Transistoren 336 und 320 bewirkt, so dass die Hilfsspannungsversorgung 331 mit Energie versorgt wird und den µC 40 aktiviert.

Dadurch wird dem I/O-Glied 370 des µC 40 eine Information über das Vorliegen eines Ausschaltbefehls zugeführt, wenn der Zündschlüssel abgeschaltet und heraus gezogen wird, und in diesem Fall wird die bereits beschriebene Selbsthaltung über den Transistor 340 wirksam, so dass der Motor 325 kontrolliert stillgesetzt werden kann.

Sehr vorteilhaft ist auch, dass im Ruhezustand nur ein kleiner Strom von weniger als 0,1 mA über die Widerstände 324, 330 und die Kollektor-Emitter-Strecken der drei Transistoren 336, 338 und 340 fließt. Diese Transistoren haben einen kleinen Ruhestrom, welcher so niedrig ist, dass er die Fahrzeugbatterie nicht wesentlich entlädt. Der MOSFET 320 selbst ist im Ruhezustand praktisch vollständig gesperrt, so dass durch ihn kein nennenswerter Strom fließt.

## Patentansprüche

1. Verfahren, insbesondere für ein Kraftfahrzeug, das zu seiner Stromversorgung mit einer Batterie versehen ist, zum Bereitstellen einer Gleichspannung aus dieser Batterie, wobei vorgesehen sind:
Ein Mikrocontroller (40);
eine steuerbare Hilfsspannungsversorgung, welche einen ersten Linearregler (20) aufweist, der durch ein Steuersignal aktivierbar ist und der aus einer Eingangsspannung (UB) eine Zwischengleichspannung (UM) erzeugt, die auf einen ersten Wert geregelt ist,
sowie einen zweiten Linearregler (30), welcher in Reihe mit dem ersten Linearregler (20) geschaltet ist und aus der Zwischengleichspannung (UM) eine Hilfsspannung erzeugt, welche auf einen zweiten Wert (UA) geregelt ist;
eine Selbsthalteschaltung (26; 26') zum Aktivhalten der Hilfsspannungsversorgung (20, 30), welche Selbsthalteschaltung (26; 26') durch ein Einschaltkriterium aktivierbar ist, und durch deren Ausgangsspannung (UA) der Mikrocontroller aktivierbar ist;
und das Verfahren folgende Schritte aufweist:
Die Hilfsspannungsversorgung (231, 232) wird durch ein Einschaltkriterium aktiviert, und durch die von ihr gelieferte Hilfsspannung (UA) wird der Mikrocontroller (40) aktiviert, welcher seinerseits die Selbsthalteschaltung (26; 26') aktiviert;
und das Vorliegen eines Ausschaltbefehls wird vom Mikrocontroller (40) erfasst, und nach Erfassen eines Ausschaltbefehls wird die Selbsthalteschaltung (26; 26') durch den Mikrocontroller (40) nach vorgegebenen Kriterien verzögert deaktiviert.

2. Verfahren nach Anspruch 1, bei welchem der Mikrocontroller (40) eine Watchdog-Schaltung (45) aufweist, und nach dem Aktivieren des Mikrocontrollers (40) dieser durch die Watchdog-Schaltung (45) initialisiert wird.

3. Anordnung, insbesondere für ein Kraftfahrzeug, dem zur Stromversorgung eine Batterie zugeordnet ist, zum Bereitstellen einer Gleichspannung aus dieser Batterie, wobei ein Mikrocontroller (40), eine steuerbare Hilfsspannungsversorgung (231, 232, 320, 331) und eine Selbsthalteschaltung (26; 26') zum Aktivhalten der Hilfsspannungsversorgung vorgesehen sind, welch letztere durch ein Einschaltkriterium aktivierbar ist, und durch deren Ausgangsspannung der Mikrocontroller (40) aktivierbar ist, welcher seinerseits dazu ausgebildet ist, nach seiner Aktivierung die Selbsthalteschaltung (26; 26') zu aktivieren und diese bei Vorliegen eines Ausschaltbefehls nach vorgegebenen Kriterien verzögert zu deaktivieren, wobei die steuerbare Hilfsspannungsversorgung einen ersten Linearregler (20) aufweist, welcher durch ein Steuersignal aktivierbar ist und welcher aus einer Eingangsspannung (UB) eine Zwischengleichspannung (UM) erzeugt, die auf einen ersten Wert geregelt ist,
sowie einen zweiten Linearregler (30), welcher in Reihe mit dem ersten Linearregler (20) geschaltet ist und aus der Zwischengleichspannung (UM) eine Hilfsspannung erzeugt, welche auf einen zweiten Wert (UA) geregelt ist.

4. Anordnung nach Anspruch 3, bei welcher der Mikrocontroller (40) eine Watchdog-Schaltung (45) aufweist, welche dazu ausgebildet ist, nach dem Aktivieren des Mikrocontrollers (40) diesen zu initialisieren.

5. Anordnung nach Anspruch 3 oder 4, bei welcher die Selbsthalteschaltung (26) so ausgebildet ist, dass sie eine Aktivität des ersten Linearreglers (20) auch dann ermöglicht, wenn das Steuersignal zu seiner Aktivierung nicht mehr vorliegt.

6. Anordnung nach einem der Ansprüche 3 bis 5, bei welcher der erste Linearregler (20) einen ersten Längstransistor (208) aufweist, dessen Basisspannung von einer Z-Diode (206) bestimmt ist.

7. Anordnung nach Anspruch 6, bei welcher die Basisspannung des ersten Längstransistors (208) durch eine Z-Diode (206) und einen Widerstand (205) bestimmt ist, und bei welcher diese Basisspannung durch einen Schalter (225), insbesondere einen zweiten Transistor, ein- und ausschaltbar ist.

8. Anordnung nach Anspruch 6 oder 7, bei welcher der Schalter (225), der insbesondere als zweiter Transistor ausgebildet ist, durch das Steuersignal und / oder die Selbsthalteschaltung (26) einschaltbar ist.

9. Anordnung nach einem der Ansprüche 3 bis 8, bei welcher als Eingangsspannung (UB) die Betriebsspannung des Kraftfahrzeugs zuführbar ist.

## Claims

1. Method, in particular for a motor vehicle which is provided with a battery for its power supply, for providing a direct voltage from this battery, the following being provided:
a microcontroller (40);
a controllable auxiliary voltage supply, which has a first linear regulator (20), which can be activated by a control signal, and which generates, from an input voltage (UB), an intermediate direct voltage (UM), which is regulated to a first value,
and a second linear regulator (30), which is connected in series to the first linear regulator (20), and which generates, from the intermediate direct voltage (UM), an auxiliary voltage, which is regulated to a second value (UA);
a seal-in circuit (26; 26') to keep the auxiliary voltage supply (20, 30) active, said seal-in circuit (26; 26') being activatable by a switching-on criterion, and by the output voltage (UA) of which the microcontroller is activatable;
and the method having the following steps:
the auxiliary voltage supply (231, 232) is activated by a switching-on criterion, and the microcontroller (40) is activated by the auxiliary voltage (UA) which it supplies, and in turn activates the seal-in circuit (26; 26');
and the presence of a switching-off command is sensed by the microcontroller (40), and after a switching-off command is sensed the seal-in circuit (26; 26') is deactivated by the microcontroller (40) after a delay according to preset criteria.

2. Method according to Claim 1, wherein the microcontroller (40) has a watchdog circuit (45), and after the microcontroller (40) is activated, it is initialised by the watchdog circuit (45).

3. Arrangement, in particular for a motor vehicle with which a battery for power supply is associated, for providing a direct voltage from this battery, a microcontroller (40), a controllable auxiliary voltage supply (231, 232, 320, 331) and a seal-in circuit (26; 26') being provided to keep the auxiliary voltage supply active, the latter being activatable by a switching-on criterion, and by the output voltage of which the microcontroller (40) can be activated, said microcontroller (40) itself being in a form, after it has been activated, to activate the seal-in circuit (26; 26'), and if a switching-off command is present to deactivate it after a delay according to preset criteria, the controllable auxiliary voltage supply having a first linear regulator (20), which can be activated by a control signal, and which generates, from an input voltage (UB), an intermediate direct voltage (UM), which is regulated to a first value,
and a second linear regulator (30), which is connected in series to the first linear regulator (20), and which generates, from the intermediate direct voltage (UM), an auxiliary voltage, which is regulated to a second value (UA).

4. Arrangement according to Claim 3, wherein the microcontroller (40) has a watchdog circuit (45), which is in a form to initialise the microcontroller (40) after it is activated.

5. Arrangement according to Claim 3 or 4, wherein the seal-in circuit (26) is in such a form that it makes an activity of the first linear regulator (20) possible even if the control signal to activate it is no longer present.

6. Arrangement according to any one of Claims 3 to 5, wherein the first linear regulator (20) has a first series pass transistor (208), the base voltage of which is determined by a Z diode (206).

7. Arrangement according to Claim 6, wherein the base voltage of the first series pass transistor (208) is determined by a Z diode (206) and a resistor (205), and wherein this base voltage can be switched on and off by a switch (225), in particular a second transistor.

8. Arrangement according to Claim 6 or 7, wherein the switch (225), which in particular is in the form of a second transistor, can be switched on by the control signal and/or the seal-in circuit (26).

9. Arrangement according to any one of Claims 3 to 8, wherein the operating voltage of the motor vehicle can be fed as the input voltage (UB).

## Revendications

1. Procédé, en particulier pour un véhicule automobile équipé d'une batterie pour son alimentation électrique, destiné à mettre à disposition une tension continue à partir de cette batterie, dans lequel procédé sont prévus :
un microcontrôleur (40) ;
une alimentation électrique auxiliaire réglable, laquelle présente un premier régulateur linéaire (20) qui peut être activé par un signal de commande et qui produit à partir de sa tension d'entrée (UB) une tension continue intermédiaire (UM) qui est régulée à une première valeur,
ainsi qu'un deuxième régulateur linéaire (30), lequel est branché en série avec le premier régulateur linéaire (20) et produit à partir de la tension continue intermédiaire (UM) une tension auxiliaire qui est régulée à une deuxième valeur (UA) ;
un circuit d'auto-maintien (26 ; 26') pour maintenir active l'alimentation électrique auxiliaire (20, 30), lequel circuit d'auto-maintien (26 ; 26') peut être activé par un critère d'activation et par la tension de sortie (UA) duquel le microcontrôleur peut être activé ;
et lequel procédé présente les étapes suivantes :
l'alimentation électrique auxiliaire (231, 232) est activée par un critère d'activation et le microcontrôleur (40) est activé par la tension auxiliaire (UA) qu'elle délivre et active lui-même le circuit d'auto-maintien (26 ; 26') ;
et la présence d'un ordre de désactivation est détectée par le microcontrôleur (40) et, après détection d'un ordre de désactivation, le circuit d'auto-maintien (26 ; 26') est désactivé de façon retardée selon des critères prédéfinis par le microcontrôleur (40).

2. Procédé selon la revendication 1, dans lequel le microcontrôleur (40) présente un circuit watchdog ou « chien de garde » (45) et, après l'activation du microcontrôleur (40), celui-ci est initialisé par le circuit chien de garde (45).

3. Dispositif, en particulier pour un véhicule automobile auquel est associée une batterie pour son alimentation électrique, destiné à mettre à disposition une tension continue à partir de cette batterie, dans lequel sont prévus un microcontrôleur (40), une alimentation électrique auxiliaire réglable (231, 232, 320, 331) et un circuit d'auto-maintien (26 ; 26') pour maintenir active l'alimentation électrique auxiliaire, cette dernière pouvant être activée par un critère d'activation et sa tension de sortie servant à activer le microcontrôleur (40), lequel est lui-même conçu pour, après son activation, activer le circuit d'auto-maintien (26 ; 26') et désactiver celui-ci de façon retardée selon des critères prédéfinis en cas de présence d'un ordre de désactivation, l'alimentation électrique auxiliaire réglable présentant un premier régulateur linéaire (20), lequel peut être activé par un signal de commande et lequel produit à partir d'une tension d'entrée (UB) une tension continue intermédiaire (UM) qui est régulée à une première valeur,
ainsi qu'un deuxième régulateur linéaire (30), lequel est branché en série avec le premier régulateur linéaire (20) et produit à partir de la tension continue intermédiaire (UM) une tension auxiliaire qui est régulée à une deuxième valeur (UA).

4. Dispositif selon la revendication 3, dans lequel le microcontrôleur (40) présente un circuit chien de garde (45), lequel est conçu pour, après l'activation du microcontrôleur (40), initialiser celui-ci.

5. Dispositif selon la revendication 3 ou 4, dans lequel le circuit d'auto-maintien (26) est conçu de façon à permettre une activité du premier régulateur linéaire (20) même quand le signal de commande pour son activation n'est plus présent.

6. Dispositif selon une des revendications 3 à 5, dans lequel le premier régulateur linéaire (20) présente un premier transistor série (208) dont la tension de base est déterminée par une diode Z (206).

7. Dispositif selon la revendication 6, dans lequel la tension de base du premier transistor série (208) est déterminée par une diode Z (206) et une résistance (205), et dans lequel cette tension de base peut être activée et désactivée par un commutateur (225), en particulier un deuxième transistor.

8. Dispositif selon la revendication 6 ou 7, dans lequel le commutateur (225), qui est réalisé en particulier sous la forme d'un deuxième transistor, peut être activé par le signal de commande et/ou le circuit d'auto-maintien (26).

9. Dispositif selon une des revendications 3 à 8, dans lequel la tension de fonctionnement du véhicule automobile peut être amenée en tant que tension d'entrée (UB).
